# EUROPÄISCHE PATENTSCHRIFT

(11) **EP 1 136 666 B1**
(45) Veröffentlichungstag und Bekanntmachung des Hinweises auf die Patenterteilung: **16.03.2005**
(21) Anmeldenummer: 01101566.6
(22) Anmeldetag: 25.01.2001
(51) Int. Cl.: F01M 11/03

(54) **Flüssigkeitsfilter mit Umgehungsventil**
Liquid filter with by-pass valve
Filtre pour liquide avec valve by-pass

(30) Priorität: 09.03.2000 DE 20004431 U
(43) Veröffentlichungstag der Anmeldung: 26.09.2001
(73) Patentinhaber: Mann + Hummel GmbH, 71638 Ludwigsburg (DE)
(72) Erfinder: Dworatzek, Klemens, 68535 Edingen (DE)
(74) Vertreter: Voth, Gerhard, Dipl.-Ing.

(56) Entgegenhaltungen:
- DE-A- 4 416 577
- DE-A- 19 809 989
- US-A- 5 770 054

## Beschreibung

### Stand der Technik

Die Erfindung betrifft einen Flüssigkeitsfilter, insbesondere Ölfilter für eine Brennkraftmaschine mit einem Umgehungsventil für die zu filternde Flüssigkeit, bei dem ein Umgehungsventil und Ventilsitz im Bereich einer Endscheibe des Filtereinsatzes angeordnet ist, nach der Gattung des Patentanspruches 1. Außerdem betrifft die Erfindung einen Filtereinsatz, der zum Einbau in den genannten Flüssigkeitsfilter geeignet ist, nach der Gattung des Patentanspruches 10.

Es ist bekannt, bei Flüssigkeitsfiltem mit zylindrischen Filtereinsätzen das Umgehungsventil im Bereich einer der stirnseitigen Endscheiben unterzubringen. Dieses wird zur Sicherung des Fluidflusses im Falle eines unzulässigen Ansteigens des Durchflusswiderstandes am Filterelement vorgesehen. Durch Öffnen des Umgehungsventils wird in diesem Falle eine Versorgung des Flüssigkeitssystems mit Flüssigkeit gewährleistet.

Ein Flüssigkeitsfilter mit Umgehungsventil ist z. B. in der DE 196 05 425 C2 offenbart. Die Figur 2 des genannten Dokumentes zeigt einen Flüssigkeitsfilter im demontiertem Zustand. Im Gehäuse ist ein Stützdom 15 vorgesehen, an dem ein durch eine Feder 12 vorgespannter Ventilkörper 9 befestigt ist. Dieser findet im eingebauten Zustand des Filterelementes 3 einen Ventilsitz 14 in der zum Filterelement zugehörigen Endscheibe 5. Dadurch ist ein kostengünstiger Aufbau des Umgehungsventils gegeben.

Bei einem Wechsel des Filterelementes wird jedoch nur der Ventilsitz 14 mitsamt dem Filterelement 3 gewechselt. Der Ventilkörper 9 verbleibt im Stützdom, der gehäusefest ausgeführt ist. Daher ist der Ventilkörper 9 im Verlauf des Gebrauches des Filters einem Verschleiß sowie einer Verschmutzung ausgesetzt. Insbesondere bei modernen Dieselmotoren kann der Ventilkörper seine Dichtheit durch Anlagerung von Rußpartikeln verlieren, so dass am Umgehungsventil ein unerwünschter, ungefilterter Nebenstrom des Schmieröls entsteht. Hierdurch wird die Qualität des Schmieröls verschlechtert, wodurch entweder die Funktion der Brennkraftmaschine gefährdet wird oder häufigere Ölwechselintervalle notwendig werden.

Um eine Fehlfunktion zu vermeiden, könnte der Ventilkörper 9 ebenfalls bei jedem Filterwechsel ausgewechselt werden. Dies erzeugt jedoch einen erhöhten Montageaufwand und schafft Fehlerquellen, weil ein Auswechseln des Ventilkörpers durch den Monteur vergessen werden könnte. Aufgabe ist es daher, ein Flüssigkeitsfilter mit einfach aufgebautem Umgehungsventil zu schaffen, welcher über die gesamte Lebensdauer zuverlässig in der Funktion ist. Diese Aufgabe wird durch die Merkmale des Patentanspruchs 1 gelöst, bzw. durch einen Filtereinsatz gemäß Anspruch 10.

### Vorteile der Erfindung

Der erfindungsgemäße Flüssigkeitsfilter, mit den Merkmalen gemäß Anspruch 1, weist in bekannter Weise eine Gehäusestruktur auf, in die ein Filtereinsatz eingebaut ist. Die Gehäusestruktur kann ein gesondertes Gehäuse darstellen oder integraler Bestandteil z. B. einer Brennkraftmaschine sein. Der Filtereinsatz ist zylindrisch aufgebaut, wobei das Umgehungsventil im Bereich einer der Endscheiben des Filtereinsatzes untergebracht ist. Dabei ist der Ventilsitz in bekannter Weise in der Endscheibe untergebracht. Andererseits ist in der Gehäusestruktur ein Stützdom vorgesehen, der zur Montage einer Feder dient, die für die Vorspannung des Umgehungsventils verantwortlich ist, wodurch der Öffnungsdruck definiert wird.

Der Flüssigkeitsfilter ist dadurch gekennzeichnet, dass auch der Ventilkörper beweglich im Filtereinsatz befestigt ist derart, dass er beim Wechsel des Filterelementes mit ausgewechselt wird. Dadurch kann eine unzulässig hohe Verschmutzung des Ventilkörpers, z. B. durch Rußablagerungen, vermieden werden, da dieser regelmäßig mit dem Filtereinsatz ausgewechselt wird. Die geforderte Zuverlässigkeit des Flüssigkeitsfilters entsprechend der Aufgabenstellung ist damit gegeben.

Beim Auswechseln des Filterelementes verbleibt die Feder, die bevorzugt eine Schraubenfeder aus Metall ist, im Stützdom. Dadurch kann das Filterelement metallfrei ausgeführt werden, was eine unproblematische Entsorgung z. B. durch Verbrennung des Filterelementes ermöglicht.

Gemäß einer günstigen Ausgestaltung der Erfindung ist der Ventilkörper axial beweglich in der Endscheibe des Filtereinsatzes gelagert. In Öffnungsrichtung des Umgehungsventils ist ein Axialanschlag für den Ventilkörper vorgesehen, der garantiert, dass dieser beim Wechseln des Filtereinsatzes nicht herausfällt. Alternativ kann der Ventilkörper auch mit geringem Übermaß im Verhältnis zu seiner Einbauöffnung in der Endscheibe gefertigt werden, so dass ein Herausrutschen bei der Montage vermieden wird, eine axiale Beweglichkeit für die Ventilfunktion jedoch noch gewähr leistet ist.

Der Axialanschlag für den Ventilkörper kann vorteilhafterweise durch elastische Nasen gebildet werden. Dies erleichtert die Montage des Ventilkörpers in der Endscheibe. Die elastischen Nasen weichen bei der Montage zurück und verhindern anschließend ein Herausfallen des Ventilkörpers.

Gemäß einer weiteren Ausgestaltung der Erfindung kann der Ventilkörper zumindest teilweise aus einem Elastomer gefertigt sein. Hierdurch lässt sich die Dichtwirkung des Ventilkörpers am Ventilsitz, welcher durch die Endscheibe gebildet ist, verbessem. Der Ventilkörper kann z. B. in Zweikomponenten-Spritztechnik hergestellt werden, wodurch eine Elastomerschicht auf dem Ventilkörper entsteht, welche mit dem Ventilsitz in Eingriff steht. Alternativ kann auch der ganze Ventilkörper aus Elastomer gefertigt werden.

Gemäß einer vorteilhaften Ausbildung der Erfindung kann zwischen der Feder und dem Ventilkörper ein Zwischenstück angeordnet werden, welches eine Kraftübertragung zwischen Feder und Ventilkörper im eingebauten Zustand des Filtereinsatzes bewirkt. Das Zwischenstück ist besonders vorteilhaft, wenn der gesamte Ventilkörper aus einem Elastomer hergestellt wird. Durch das Zwischenstück kann dann die Federkraft auf den Ventilkörper übertragen werden, ohne diesen zu beschädigen. Außerdem lässt sich das Zwischenstück zur Fixierung der Feder am Einbauort nutzen.

Die beschriebene Lösung mit Zwischenstück lässt sich im übrigen auch bei einem Flüssigkeitsfilter gemäß der DE 196 05 425 C2 verwirklichen. Um bei einem Auswechseln des Filtereinsatzes eine mehrfache Verwendung des Ventilkörpers zu vermeiden, kann dieser durch geeignete Gestaltung eines neuen Ventilkörpers in der Endscheibe des ausgewechselten Filtereinsatzes zu dem beschriebenen Zwischenstück umfunktioniert werden. Der ehemalige Ventilkörper übernimmt somit nur noch die Funktion der Kraftübertragung zwischen Feder und Ventilkörper. Die Dichtungsfunktion wird auf den neuen Ventilkörper verlagert, der weder verschmutzt noch verschlissen ist und somit eine zuverlässige Funktion des Umgehungsventils im weiteren Gebrauch des Flüssigkeitsfilters gewährleistet.

Es ist vorteilhaft, den Stützdom, der zur Aufnahme der Feder dient, gleichzeitig zur Abstützung des Filtermediums zu nutzen. Dies lässt sich verwirklichen, wenn das Filterelement von außen nach innen durchströmt wird. Alternativ kann das Filterelement auch von innen nach außen durchströmt werden. Entsprechend der Wirkungsrichtung des Umgehungsventils muss der Stützdom dann jedoch außerhalb des Filtereinsatzes angebracht werden, so dass die Feder ihre Federkraft von außen in Richtung der Endscheibe des Filterelementes entfalten kann.

Eine besondere Ausgestaltung der Erfindung sieht vor, dass bei einem von außen nach innen durchströmten Filtereinsatz der Durchgang im Filtereinsatz, welcher zum Auslass der Gehäusestruktur führt und das Umgehungsventil parallel wirkend in ein und derselben Endscheibe des Filtereinsatzes untergebracht sind. Im Falle eines Öffnens des Umgehungsventils sind auf diese Weise kürzeste Wege realisierbar, wodurch eine Verschmutzung der Reinseite des Filterelementes vermieden wird. Weiterhin ist dadurch ein kompakter Aufbau des Flüssigkeitsfilters möglich. Bei der beschriebenen Ausgestaltung ist es vorteilhaft, den Ventilkörper ringförmig auszuführen. Der Durchgang zum Auslass des Flüssigkeitsfilters ist dann im Inneren angeordnet und ist vom Ventilsitz ringförmig umgeben.

Die Gehäusestruktur des Flüssigkeitsfilters kann vorteilhaft als Wechselfilter ausgeführt sein. Damit ist gemeint, dass sich der Filtereinsatz in dieser Gehäusestruktur einzeln auswechseln lässt, jedoch die gesamte Gehäusestruktur anstelle eine Wegwerffitters am Einbauort montiert werden kann. Auf diese Weise lassen sich z. B. die Wegwerffilter älterer Motorenbaureihen durch die umweltfreundlicheren Varianten mit auswechselbaren Filtereinsätzen ersetzen.

Diese und weitere Merkmale von bevorzugten Weiterbildungen der Erfindung gehen außer aus den Ansprüchen auch aus der Beschreibung und den Zeichnungen hervor.

### Zeichnung

Weitere Einzelheiten werden in den Zeichnungen anhand von schematischen Ausführungsbeispielen beschrieben. Hierbei zeigen
- Figur 1: den erfindungsgemäßen Flüssigkeitsfilter in der Ausführung als Wechselfilter im Mittelschnitt und
- Figur 2: einen Flüssigkeitsfilter gemäß DE 196 05 425 C2 mit dem nachgerüsteten erfindungsgemäßen Filtereinsatz im Mittelschnitt.

### Beschreibung der Ausführungsbeispiele

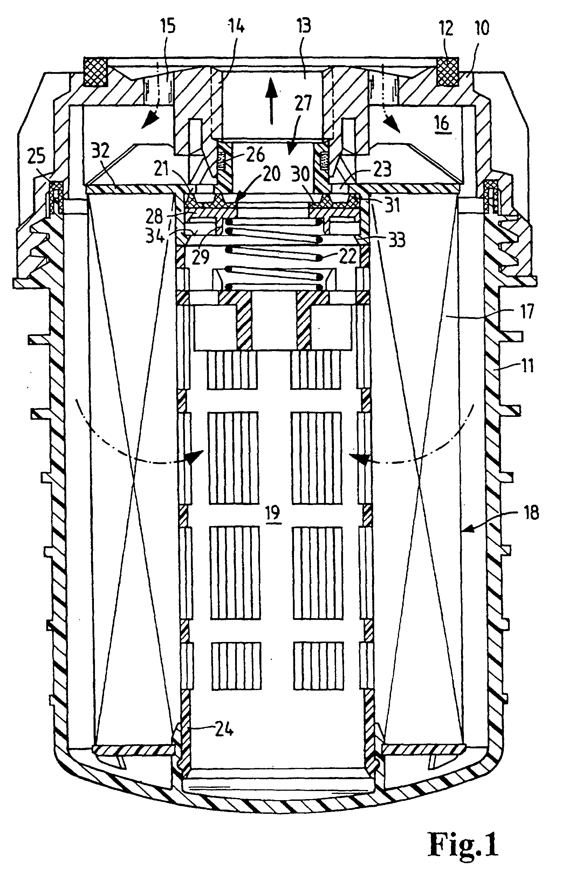

Der in Figur 1 dargestellte Flüssigkeitsfilter weist eine Gehäusestruktur, bestehend aus einem Sockel 10 und einem Schraubdeckel 11 auf. Mit Hilfe eines Dichtringes 12 und einem in einem Auslass 13 vorgesehenen Gewinde 14 im Sockel wird die Gehäusestruktur am Einbauort befestigt, wodurch ein Einlass 15 und der Auslass gebildet werden.

Die zu filternde Flüssigkeit strömt durch den Einlass 15 in eine Rohseite 16 des Filters, durchtritt von dort ein Filtermedium 17 eines Filtereinsatzes 18, gelangt so in einen Innenraum 19 des Filtereinsatzes, der die Reinseite des Filters darstellt und strömt durch den Auslass 13 aus dem Filter heraus. Bei Überschreiten eines bestimmten Druckunterschiedes am Filterelement öffnet ein Umgehungsventil, bestehend aus einem Ventilkörper 20, einem Ventilsitz 21 und einer Feder 22, die den Ventilkörper auf den Ventilsitz drückt. Dadurch strömt die Flüssigkeit durch Umgehungsöffnungen 23 und gelangt so auf direktem Wege von der Rohseite 16 in den Innenraum 19 des Filtereinsatzes 18.

Im Schraubdeckel fest montiert befindet sich ein Stützdom 24, in dem einerseits die Feder 22 montiert ist und der andererseits zur Abstützung des Filtermediums 17 dient. Auf diesen Stützdom kann vor der Montage der Filtereinsatz 18 aufgeschoben werden, in den der Ventilkörper 20 und der Ventilsitz 21 integriert sind. Anschließend wird der Schraubdeckel 11 in den Sockel 10 eingeschraubt, wobei eine Abdichtung durch eine Formdichtung 25 zwischen Sockel und Schraubdeckel und durch einen O-Ring 26 zwischen einem Durchgang 27 für die gereinigte Flüssigkeit und dem Auslass 13 erfolgt.

Der Ventilkörper 20 besteht aus einem Ventilteller 28 mit einer Federaufnahme 29, auf den ein Dichtungsteller 30 aus einem Elastomer aufgebracht ist. Dieser weist zwei ringförmige Dichtlippen 31 auf, die mit dem in einer Endscheibe 32 integrierten Ventilsitz 21 in Verbindung stehen. In dem Zwischenraum zwischen den Dichtlippen 31 sind die Umgehungsöffnungen 23 ringförmig angeordnet. Der Ventilkörper ist in der Endscheibe 32 mit Axialspiel gelagert und weist einen durch eine elastische Nase 33 gebildeten Axialanschlag 34 auf. Die elastische Nase ist umlaufend am unteren Ende der Endscheibe angebracht. Zur Montage des Ventilkörpers 20 in der Endscheibe weicht die Nase zurück, verhindert aber anschließend ein Herausfallen des noch nicht durch die Feder 22 belasteten Ventilkörpers.

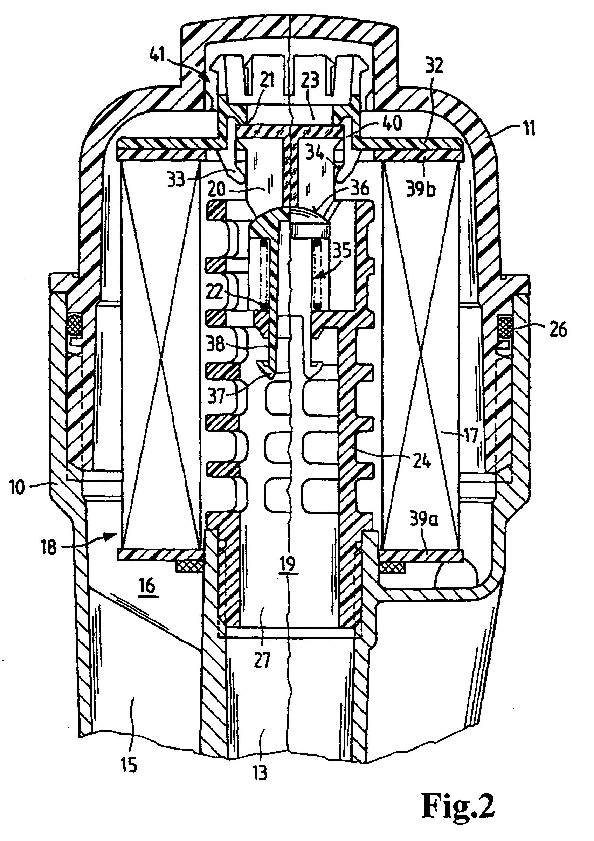

Der Flüssigkeitsfilter gemäß Figur 2 folgt im wesentlichen dem Funktionsprinzip, welches zur Figur 1 bereits beschrieben ist. Äquivalente Bauteile sind mit den gleichen Bezugszeichen versehen. Der Filtereinsatz 18 ist ebenfalls von außen nach innen durchströmt. Allerdings befindet sich der Durchgang 27 zum Auslass 13 des Flüssigkeitsfilters gegenüber dem Umgehungsventil. Außerdem kommt zur Bildung des Umgehungsventils ein Zwischenstück 35 zum Einsatz. Dieses kann unter Verwendung anderer als dem dargestellten Filtereinsatz auch als Ventilkörper gewirkt haben. In der dargestellten Lösung dient es jedoch lediglich zur Aufnahme der Feder 22 und zur Weiterleitung der Federkraft an den Ventilkörper 20, der einteilig aus einem Elastomer hergestellt ist. Das Zwischenstück besitzt eine pilzförmige Kontaktfläche 36, die den Ventilkörper 20 aufnimmt. Weiterhin sind Anschlagnasen 37 vorgesehen, die an elastischen Zungen 38 angebracht sind. Durch diese Elemente wird die Montage des Zwischenstücks im Stützdom 24 erleichtert und bei montiertem Zwischenstück die Feder 22 auch bei ausgebautem Filtereinsatz 18 fixiert.

Das Filtermedium ist stirnseitig mit Folienendscheiben 39a, b abgedichtet. Die obere Folienendscheibe 39b ist mit der Endscheibe 32 versehen, welche den Ventilkörper 20 aufnimmt und den Ventilsitz 21 enthält. Mit Hilfe von Rippen 40 wird der Ventilkörper 20 axial geführt, wobei die Rippen in die Nasen 33, die als Axialanschlag 34 wirken, auslaufen. Außerdem ist durch die Endscheibe 32 ein Rastverbindung 41 zur Fixierung des Filtereinsatzes 18 bei Aufschrauben des Filters im Schraubdeckel 11 vorgesehen.

## Patentansprüche

1. Flüssigkeitsfilter, insbesondere Ölfilter für eine Brennkraftmaschine, welcher eine Gehäusestruktur mit einem Einlass (15) und einem Auslass (13) für die zu filtemde Flüssigkeit aufweist, in der ein zylindrischer Filtereinsatz (18) eingebaut ist, welcher im Bereich einer der Endscheiben ein Umgehungsventil aufweist, wobei
- das Umgehungsventil aus einem Ventilkörper (20) besteht, welcher im geschlossenen Zustand auf einem Ventilsitz (21), der in eine Endscheibe (32) des Filtereinsatzes integriert ist, aufliegt,
- ein Stützdom (24) für eine Feder (22), die durch den eingebauten Ventilkörper (20) unter Vorspannung gehalten ist, im Gehäuse angebracht ist,
**dadurch gekennzeichnet, dass** der Ventilkörper (20) beweglich im Filtereinsatz (18) gelagert ist, derart, dass er bei einem Wechsel des Filterelementes mit ausgewechselt wird.

2. Flüssigkeitsfilter nach Anspruch 1, **dadurch gekennzeichnet, dass** der Ventilkörper (20) axial beweglich in der Endscheibe (32) des Filtereinsatzes (18) gelagert ist und in Öffnungsrichtung des Umgehungsventils einen Axialanschlag (34) aufweist.

3. Flüssigkeitsfilter nach einem der vorherigen Ansprüche, **dadurch gekennzeichnet, dass** der Axialanschlag (34) aus elastischen Nasen (33) besteht.

4. Flüssigkeitsfilter nach einem der vorherigen Ansprüche, **dadurch gekennzeichnet, dass** der Ventilkörper (20) zumindest teilweise aus einem Elastomer besteht.

5. Flüssigkeitsfilter nach einem der vorherigen Ansprüche, **dadurch gekennzeichnet, dass** zwischen der Feder (22) und dem Ventilkörper (20) ein Zwischenstück (35) zur Kraftübertragung zwischen den beiden Bauteilen vorgesehen ist.

6. Flüssigkeitsfilter nach einem der vorherigen Ansprüche, **dadurch gekennzeichnet, dass** der Stützdom in einem zylindrischen Innenraum (19) des Filtereinsatzes (18) untergebracht ist, wobei sich das Filtermedium (17) auf dem Stützdom abstützt.

7. Flüssigkeitsfilter nach einem der vorherigen Ansprüche, **dadurch gekennzeichnet, dass** das Umgehungsventil und ein Durchgang (27) zum Anschluss (13) in derselben Endscheibe parallel angeordnet sind.

8. Flüssigkeitsfilter nach Anspruch 7, **dadurch gekennzeichnet, dass** der Ventilkörper (20) und die mit diesem kommunizierende Endscheibe (32) den zum Auslass (13) führenden Durchgang (27) für die gefilterte Flüssigkeit aufweisen und das Umgehungsventil den Durchgang (27) ringförmig umgibt.

9. Flüssigkeitsfilter nach einem der vorherigen Ansprüche, **dadurch gekennzeichnet, dass** die Gehäusestruktur als Wechselfilter ausgeführt ist.

10. Filtereinsatz gemäß Anspruch 1, **dadurch gekennzeichnet, dass** dieser in einen Flüssigkeitsfilter gemäß einem der vorherigen Ansprüche einbaubar ist mit einem Umgehungsventil, welches aus einem Ventilkörper (20) besteht, welcher im geschlossenen Zustand auf einem Ventilsitz (21), der in eine Endscheibe (32) des Filtereinsatzes integriert ist, aufliegt,
wobei der Ventilkörper (20) beweglich in Filtereinsatz (18) gelagert ist, derart, dass er bei einen Wechsel des Filterelements mit ausgewechselt wird.

## Claims

1. Liquid filter, more especially oil filter for an internal combustion engine, said filter having a housing structure with an inlet (15) and an outlet (13) for the liquid to be filtered, a cylindrical filter insert (18), which has a by-pass valve in the region of one of the end discs, being installed in said filter, wherein
- the by-pass valve comprises a valve body (20), which, in the closed state, rests on a valve seat (21), which is incorporated into an end disc (32) of the filter insert,
- a support dome (24) for a spring, which is retained in a prestressed state by means of the installed valve body (20), is mounted in the housing,
**characterised in that** the valve body (20) is mounted so as to be displaceable in the filter insert (18) in such a manner that, when the filter element is changed, the valve body (20) is replaced at the same time.

2. Liquid filter according to claim 1, **characterised in that** the valve body (20) is mounted so as to be axially displaceable in the end disc (32) of the filter insert (18) and has an axial stop member (34) in the direction of opening of the by-pass valve.

3. Liquid filter according one of the preceding claims, **characterised in that** the axial stop member (34) is produced from resilient tabs (33).

4. Liquid filter according to one of the preceding claims, **characterised in that** the valve body (20) is produced at least partially from an elastomer.

5. Liquid filter according to one of the preceding claims, **characterised in that** an intermediate member (35) is provided between the spring (22) and the valve body (20) for transmitting force between the two components.

6. Liquid filter according to one of the preceding claims, **characterised in that** the support dome is accommodated in a cylindrical inner space (19) of the filter insert (18), wherein the filter medium (17) is supported on the support dome.

7. Liquid filter according to one of the preceding claims, **characterised in that** the by-pass valve and a passage (27) to the connection (13) are disposed in parallel in the same end disc.

8. Liquid filter according to claim 7, **characterised in that** the valve body (20) and the end disc (32) which communicates with said valve body (20) include the passage (27) which leads to the outlet (13) for the filtered liquid and the by-pass valve surrounds the passage (27) in a ring-shaped manner.

9. Liquid filter according to one of the preceding claims, **characterised in that** the housing structure is in the form of a changeable filter.

10. Filter insert according to claim 1, **characterised in that** said filter insert is installable into a liquid filter according to one of the preceding claims having a by-pass valve, which comprises a valve body (20), which, in the closed state, rests on a valve seat (21), which is incorporated into an end disc (32) of the filter insert, wherein the valve body (20) is mounted so as to be displaceable in the filter insert (18) in such a manner that, when the filter element is changed, the said valve body (20), is replaced at the same time.

## Revendications

1. Filtre pour liquides, notamment filtre à huile pour un moteur à combustion interne, qui présente une structure de boîtier avec une entrée (15) et une sortie (13) pour le liquide à filtrer, et dans laquelle un élément filtrant cylindrique (18) présentant une soupape de dérivation au niveau d'une des plaques de fond,
- la soupape de dérivation étant composée d'un corps de soupape (20) disposé, à l'état fermé, sur un siège de soupape (21) qui est intégré dans une plaque de fond (32) de l'élément filtrant, et
- un dôme de support (24) pour un ressort (22) maintenu en compression par un corps de soupape intégré (20) étant disposé dans le boîtier,
**caractérisé en ce que**
le corps de soupape (20) est mobile dans l'élément filtrant (18) de telle sorte qu'il est remplacé avec l'élément filtrant lors du remplacement de celui-ci.

2. Filtre pour liquides selon la revendication 1,
**caractérisé en ce que**
le corps de soupape (20) est mobile axialement dans la plaque de fond (32) de l'élément filtrant (18) et présente une butée axiale (34) dans la direction d'ouverture de la soupape de dérivation.

3. Filtre pour liquides selon l'une des revendications précédentes,
**caractérisé en ce que**
la butée axiale (34) est formée par des becs élastiques (33).

4. Filtre pour liquides selon l'une des revendications précédentes,
**caractérisé en ce que**
le corps de soupape (20) est, au moins partiellement, composé d'un élastomère.

5. Filtre pour liquides selon l'une des revendications précédentes,
**caractérisé en ce qu'**
entre le ressort (22) et le corps de soupape (20), une pièce intermédiaire (35) transmet la force entre les deux composants.

6. Filtre pour liquides selon l'une des revendications précédentes,
**caractérisé en ce que**
le dôme de support est placé dans une chambre intérieure cylindrique (19) de l'élément filtrant (18), le milieu filtrant (17) étant en appui sur le dôme de support.

7. Filtre pour liquides selon l'une des revendications précédentes,
**caractérisé en ce que** la soupape de dérivation et un passage (27) de raccordement (13) sont disposés parallèlement dans la même plaque de fond.

8. Filtre pour liquides selon la revendication 7,
**caractérisé en ce que** le corps de soupape (20) et la plaque de fond (32) communiquant avec celui-ci présentent le passage (27) pour le liquide filtré conduisant à la sortie (13) et la soupape de dérivation entoure le passage (27) de manière annulaire.

9. Filtre pour liquides selon l'une des revendications précédentes,
**caractérisé en ce que**
la structure de boîtier est réalisée sous la forme d'un filtre échangeable.

10. Elément filtrant selon la revendication 1,
**caractérisé en ce qu'**
il peut être monté dans un filtre pour liquides selon l'une des revendications précédentes, comprenant une soupape de dérivation composée d'un corps de soupape (20) disposé, à l'état fermé, sur un siège de soupape (21) qui est intégré dans une plaque de fond (32) de l'élément filtrant, le corps de soupape (20) étant mobile dans l'élément filtrant (18) de telle sorte qu'il est remplacé avec l'élément filtrant lors du remplacement de celui-ci.
